# DEMANDE DE BREVET EUROPEEN

(11) **EP 1 695 872 A1**
(43) Date de publication de la demande: **30.08.2006**
(21) Numéro de dépôt: 06300159.8
(22) Date de dépôt: 23.02.2006
(51) Int. Cl.: B60R 13/08

(54) **Dispositif insonorisant multicouche, respectant des contraintes de chocs piétons, pour composant situé dans le compartiment moteur d'un véhicule automobile**

(30) Priorité: 25.02.2005 FR 0550523
(71) Demandeur: Renault s.a.s., 92100 Boulogne Billancourt (FR)
(72) Inventeur: Der Matheossian, Jean-Yves, 75005 Paris (FR)

(57) **Abrégé**

Dispositif insonorisant multicouche pour au moins un composant du compartiment moteur d'un véhicule automobile composé d'au moins un couvercle inférieur (10), s'appuyant au moins partiellement sur un composant du haut-moteur (8), et d'un corps supérieur (9) recouvrant avec un espacement le couvercle inférieur (10) caractérisé en ce que, le couvercle inférieur (10) est placé en dehors de l'espace de déformation du capot (1), tandis que le corps supérieur (9) est placé dans l'espace de déformation du capot (1), et en ce que le corps supérieur (9) est composé d'une couche de support (3) dont la face dirigée vers le composant est solidaire d'un ensemble de résonateurs de Helmholtz (11).

## Description

L'invention concerne un dispositif d'atténuation du bruit pour un composant du compartiment moteur d'un véhicule automobile, ce composant étant situé à proximité du capot du véhicule et devant respecter des contraintes de choc piéton. Elle s'applique notamment aux dispositifs insonorisants pour au moins un composant du compartiment moteur d'un véhicule automobile composé d'au moins un couvercle inférieur, s'appuyant au moins partiellement sur un composant du haut-moteur, et d'un corps supérieur recouvrant avec un espacement le couvercle inférieur, le véhicule comportant un capot.

Avec un compartiment moteur disposé à l'avant d'un véhicule automobile, la partie haute du moteur appelée "haut-moteur" se trouve à proximité de la tôle du capot avant. Les contraintes de choc piéton peuvent nécessiter qu'un espace libre soit aménagé entre le capot et le haut moteur. Cet espace libre a pour but de permettre l'enfoncement progressif du capot lors d'une collision avec un piéton. Cette phase de collision est appelée "choc piéton". Pendant son enfoncement, le capot ne doit pas entrer en contact avec une partie rigide d'un composant du haut-moteur, ceci afin de réduire la gravité des blessures du piéton.

En plus de la nécessité de laisser un espace pour la déformation du capot, il faut aussi une bonne isolation acoustique du moteur. Pour cela l'espace entre les composants du haut-moteur et le capot est généralement réparti entre les pièces d'habillage du haut-moteur, les matériaux acoustiques fixés sous le capot, et un faible espace libre servant de garde au débattement du haut-moteur et à la circulation d'air de refroidissement des composants.

Les pièces d'habillage du dessous du capot se composent généralement d'au moins un type de matériau acoustique absorbant, fixé sous le capot.

Les pièces d'habillage du haut-moteur quant à elles, se composent de matériaux acoustiques absorbants ou isolants fixés sous une coque isolante. La coque isolante est elle-même fixée aux composants du haut-moteur par des éléments de liaison équipés de plots élastiques ou par un joint souple disposé sur la périphérie de la coque. Le dispositif de montage de cette coque impose de conserver une garde entre les matériaux acoustiques sous la coque et la surface du haut-moteur. Cette garde est un handicap lorsqu'on cherche à réduire la hauteur totale des pièces d'habillage du haut-moteur pour autoriser une déformation correcte du capot.

La présence d'un écran acoustique est également un handicap si celui-ci est comprimé par le capot pendant son enfoncement. En effet, l'épaisseur de l'écran acoustique conventionnel reste non négligeable pendant le choc : c'est l'épaisseur de la coque et l'épaisseur de la matière absorbante au maximum de sa compression durant le choc. Cette épaisseur de matière absorbante reste importante après la compression, du fait de la forte raideur surfacique des matériaux absorbants habituellement employés. La course d'enfoncement du capot est donc sensiblement réduite en présence de la coque, et de la matière absorbante en limite de compression.

Pour que le capot n'entre pas en contact avec une pièce dure du haut-moteur pendant le choc piéton, on a déjà cherché à aménager un plus grand espace libre entre le capot et le haut-moteur. On a par exemple essayé de réduire la hauteur du haut-moteur, mais cette démarche augmente généralement son encombrement suivant d'autres dimensions.

Une autre solution consiste à supprimer les pièces d'habillage du haut-moteur. Mais cette suppression pose problème, car ces pièces ont souvent pour fonction de réduire le bruit émis par les pièces du haut-moteur.

En outre, la suppression partielle des matériaux acoustiques fixés sous le capot a également été envisagée, mais cette solution diminue l'atténuation du bruit des composants sous capot.

Afin de résoudre à la fois les problèmes liés à la protection des piétons lors d'un choc avec le capot, et la nécessité d'absorber les nuisances sonores en provenance du moteur, la publication FR2 852 901 propose un couvercle pour un composant installé dans le compartiment moteur d'un véhicule automobile. Ce couvercle présente une structure de support qui intègre un corps protecteur pour piéton sur la face opposée au composant, et un corps d'absorption du bruit sur la face tournée vers le composant. Ces différents corps peuvent être fabriqués d'une seule pièce en matériau alvéolaire. L'accouplement du couvercle au haut-moteur s'effectue au moins avec une pièce de raccordement située côté moteur, notamment à l'aide d'un dispositif à déformation élastique.

Ce type de couvercle nécessite un espace entre le corps d'absorption et la surface du haut-moteur. Cet espace isole le couvercle d'une partie des vibrations du moteur et autorise la déformation élastique du dispositif d'accouplement pendant le choc.

Du fait de l'intégration d'une fonction acoustique et d'une fonction de protection du piéton, la conception du couvercle empêche le passage des câbles et des tuyaux qui équipent généralement les composants du haut-moteur.

L'invention vise à satisfaire aux contraintes de choc piéton sans dégrader la fonctionnalité acoustique des pièces d'habillage, et à autoriser le passage des câbles et des tuyaux qui équipent généralement les composants du haut-moteur.

Dans ce but elle propose de placer le couvercle en dehors de l'espace de déformation du capot, et de placer le corps supérieur dans l'espace de déformation du capot, le corps supérieur étant composé d'une couche de support, dont la face dirigée vers le composant est solidaire d'un ensemble de résonateurs atténuant le bruit du haut-moteur.

Avantageusement les résonateurs sont réalisés dans un matériau souple à partir de cavités individuelles coopérant chacune avec un organe acoustique, qui peut être soit une membrane de type épais et perforé recouvrant au moins une cavité, soit une membrane de type souple non perforé recouvrant au moins une cavité, soit encore un corps viscoélastique remplissant tout ou partie d'au moins une cavité, soit enfin un ressort ensaché de forme sensiblement cylindrique, maintenu en légère compression au moyen d'un film étanche tendu par le ressort.

De manière préférée, le couvercle inférieur est composé d'une couche acoustiquement isolante recouvrant au moins un matériau acoustiquement absorbant, ayant une forme complémentaire à celle de la surface du composant tourné vers le couvercle.

D'autres avantages et caractéristiques de l'invention apparaîtront mieux à la lecture de la description détaillée d'exemples, non limitatifs, de réalisation de la présente invention, faite en référence aux figures suivantes qui représentent :
- figure 1 : une vue schématique générale du dispositif insonorisant selon l'invention.
- figure 2 et 2A : des vues schématiques d'un mode de réalisation du couvercle inférieur selon l'invention.
- figures 3, 3A, 3B, 3C, 3D et 3E : des vues schématiques de résonateurs selon l'invention.
- figures 4, 4A, 4B et 4C : des vues schématiques de résonateurs à parois individuelles ou jointives.
- figures 5 et 5A : des vues schématiques de matériaux viscoélastiques partiellement enfoncés dans certaines cavités des résonateurs.
- figure 6, 6A, 6B et 6C : des vues schématiques d'une variante du mode de réalisation des figures 5 et 5a.
- figures 7 et 7A : des vues schématiques d'une fixation du corps supérieur au dessous du capot.
- figures 8 : une vue schématique d'exemples d'appui du corps supérieur sur le couvercle inférieur ou à la périphérie de celui-ci.
- figures 9, 9A, 9b et 10 : des vues schématiques d'éléments de fixation du corps supérieur avec possibilité de coulissement pendant le choc piéton.
- figure 11 : une vue schématique de l'espace de déformation du capot.
- figures 12, 12A et 12b : des vues schématiques de circulation de câbles et de tuyaux entre le corps supérieur et le couvercle inférieur.
- figures 13 et 13A : des vues schématiques d'un matériaux souples isolants réalisant l'étanchéité acoustique entre les deux couches du dispositif insonorisant.
- figure 14 : une vue schématique du passage des câbles et des tuyaux dans le couvercle inférieur.
- figures 15 et 15A : des vues schématiques d'un creux du couvercle inférieur et d'éléments rapportés assurant le guidage de tuyaux ou de câbles.

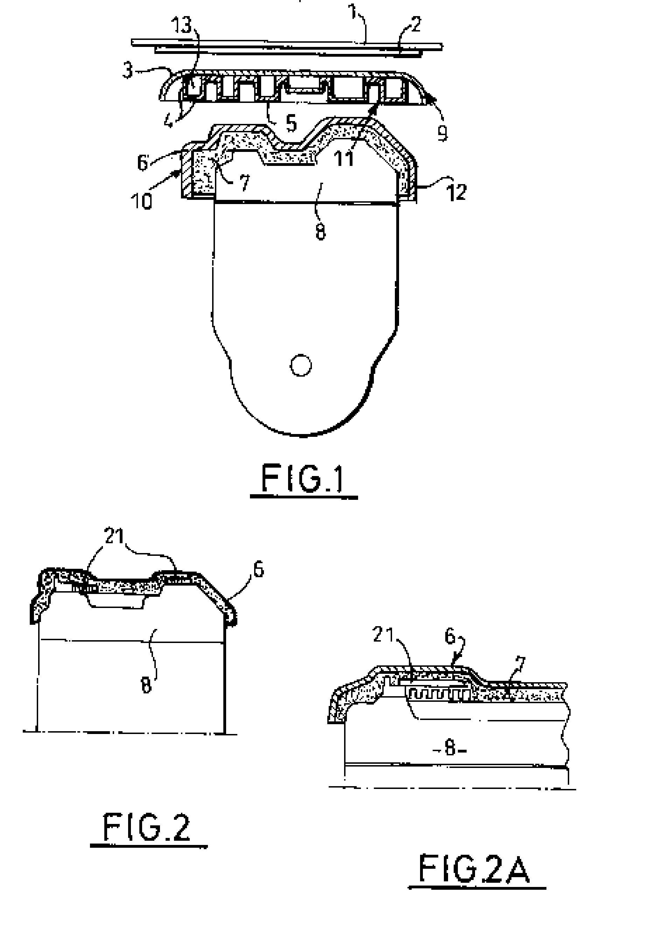

La figure 1 montre un dispositif insonorisant associant plusieurs couches formant un écran acoustique, situé entre le capot 1 d'un véhicule automobile et un composant du haut moteur 8. Le complexe multicouche est constitué d'un couvercle inférieur 10 et d'un corps supérieur 9.

Le couvercle inférieur 10 est composé d'une couche souple acoustiquement isolante 6, surmontant un matériau acoustique absorbant 7. Cette couche isolante 6 peut être constituée, d'une peau souple de finition étanche ou offrant une résistance au passage de l'air, et/ou peut comporter une couche de protection thermique. En outre, la couche isolante 6 peut comporter une coque souple de faible épaisseur en matière plastique. Le matériau acoustique absorbant 7 est en contact avec le composant 8 du haut-moteur et a une forme complémentaire à celle du contour extérieur de ce composant.

Dans le cas où la couche isolante 6 comporte une coque souple, cette coque est composée d'au moins un matériau monocouche en matière souple, ou d'un matériau multicouche comportant au moins une couche amortissante. La structure souple de la couche isolante 6 facilite les opérations de montage/démontage du couvercle inférieur 10 sur le composant 8 du haut-moteur.

Toujours en se référant à la figure 1, on voit que le corps supérieur 9 intègre un réseau de résonateurs de Helmholtz 11 à corps souple disposés sous une couche de support déformable 3. Les parois 4 de la cavité 13 des résonateurs 11 sont fabriquées avec un matériau souple. On utilise un matériau souple pour éviter que la profondeur de pénétration ne soit modifiée par la mise en contact du capot 1 avec une partie rigide d'un composant du haut-moteur 8, pendant sa course d'enfoncement. De préférence, le matériau souple est constitué d'une mousse alvéolaire de faible densité avec une finition de surface améliorant sa résistance au passage de l'air. Ces résonateurs 11 sont réalisés à partir de cavités individuelles 13 travaillant selon le principe de Helmholtz. Chaque cavité est recouverte d'une membrane 5 orientée vers le haut-moteur. La membrane de chaque résonateur est perforée ou non, suivant le mode de réalisation adopté.

Selon le mode de réalisation préféré de l'invention, le corps supérieur 9 est conçu pour absorber une partie de l'énergie de choc pendant la compression du dispositif insonorisant, entre le capot 1 et le couvercle inférieur 10 au cours du choc piéton.

Le corps supérieur 9 est composé d'un ou de plusieurs matériaux de type viscoélastique qui forment les parois de la cavité des résonateurs 11. Le matériau viscoélastique permet de dissiper une partie de l'énergie du choc lorsqu'il est comprimé entre le capot et le corps inférieur solidaire des parties rigides du composant. De préférence, ce matériau est une mousse polyuréthanne viscoélastique à cellules fermées.

Au cours de l'enfoncement du capot 1, le corps supérieur 9 entre en contact avec le couvercle inférieur 10. Le corps supérieur 9 absorbe ensuite une partie de l'énergie du choc pendant sa compression contre le couvercle inférieur 10 plus faiblement compressible.

De cette façon, le corps supérieur 9 réduit sensiblement la course de pénétration maximale du capot 1, tout en conservant une progressivité de son enfoncement pendant un choc piéton.

Comme on peut le voir sur les figures 2 et 2A, le matériau acoustique absorbant 7 composant le couvercle inférieur, peut intégrer au moins une couche de matériau 21 dont la masse surfacique diffère de celle du matériau absorbant 7, dans le but d'obtenir une coopération des différentes couches suivant un fonctionnement masse/ressort. La couche de matériau 21 à masse surfacique spécifique équivaut à une masse, ladite couche étant désignée par les termes de couche lourde. La couche de matériau absorbant 7 équivaut à un ressort. On ajuste la raideur de cette couche en modifiant sa forme ou en ajustant sa densité. Un tel fonctionnement est susceptible de filtrer une partie des vibrations de la surface du composant du haut-moteur 8 dans une plage sélective de fréquences, où le couvercle inférieur 10 n'atténuerait pas significativement le rayonnement acoustique de ce composant par l'effet de sa couche de matériaux absorbant. Le couvercle inférieur 10 permet d'atténuer le bruit dans la plage des hautes fréquences à partir de 800 Hertz.

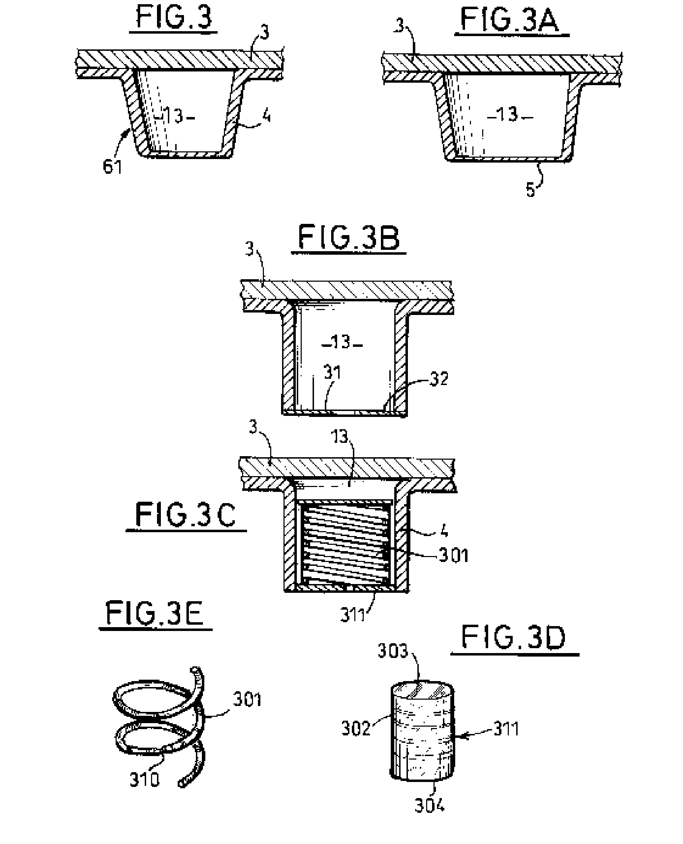

Les figures 3 et 3a montrent des résonateur à membrane non perforée. Dans ce cas c'est la coopération entre la cavité et la membrane qui conduit à une atténuation du bruit. Dans le cas d'un résonateur à membrane perforée, et comme visible sur la figure 3b, c'est la coopération entre la cavité 13 et le volume du trou de perforation 31 qui conduit à une atténuation du bruit. Le mode de réalisation des résonateurs est choisi en fonction du volume disponible entre le capot 1 et le haut-moteur équipé du couvercle inférieur 10.

De manière avantageuse, il est possible d'accorder pour chaque résonateur la taille de la cavité 13, la masse de la membrane ou les dimensions du trou 31 de la membrane perforée, afin que l'ensemble des résonateurs 11 possède une atténuation pour la plage de fréquence comprise entre 350 et 1000 Hz.

Suivant le mode de réalisation des figures 3c, 3d, les cavités 13 des résonateurs du corps supérieur 9 sont de forme sensiblement cylindrique et, la paroi 4 des cavités est composée d'un matériau viscoélastique ou d'un matériau souple poreux déformable, qui intègre un logement pouvant accueillir un ressort 301 de forme complémentaire à celle des cavités 13. Les cavités 13 du corps supérieur 9 ne sont pas dans ce cas recouvertes d'une membrane. Le ressort 301 de forme cylindrique est maintenu en légère compression et, ensaché sous un film 302 étanche dont les parois, et notamment les parois membranaires supérieures 303 et inférieures 304, sont maintenues en position sous tension par l'effort de rappel du ressort 301. L'association du ressort 301 et du film 302 forme une cavité couplée aux deux membranes, lesdites cavité et membranes étant susceptibles de former un résonateur acoustique 311 dissipant les bruits du composant 8.

La matière souple des parois 4 de chaque résonateur maintient en place le résonateur de Helmholtz. En adoptant une matière absorbante très souple et peu étanche, le dispositif à résonateurs de Helmholtz est susceptible d'accueillir une couche absorbante très compressible directement sous la coque.

Suivant une variante du même mode de réalisation, certains résonateurs à ressort 311 sont disposés dans les cavités 13 du corps supérieur 9, en position partiellement enfoncée et maintenus en contact avec la surface extérieure du corps inférieur 10. Ceci permet de multiplier les ensembles cavité plus membrane couplée et ainsi, le corps inférieur 10 supporte localement le corps supérieur 9. Cette disposition en position partiellement enfoncée permet également d'élargir le spectre d'absorption de chaque résonateur autour de sa fréquence centrale.

Comme on peut le constater sur la figure 3E, les spires du ressort peuvent comporter des zones de faiblesse aménagées, par exemple des rétrécissements localisés 310 de la section de spires d'un ressort moulé en matière plastique, afin de provoquer un mécanisme de rupture du ressort pendant la compression. Ce mécanisme de rupture permet de ne pas dégrader la progressivité de l'enfoncement pendant la compression du corps supérieur 9.

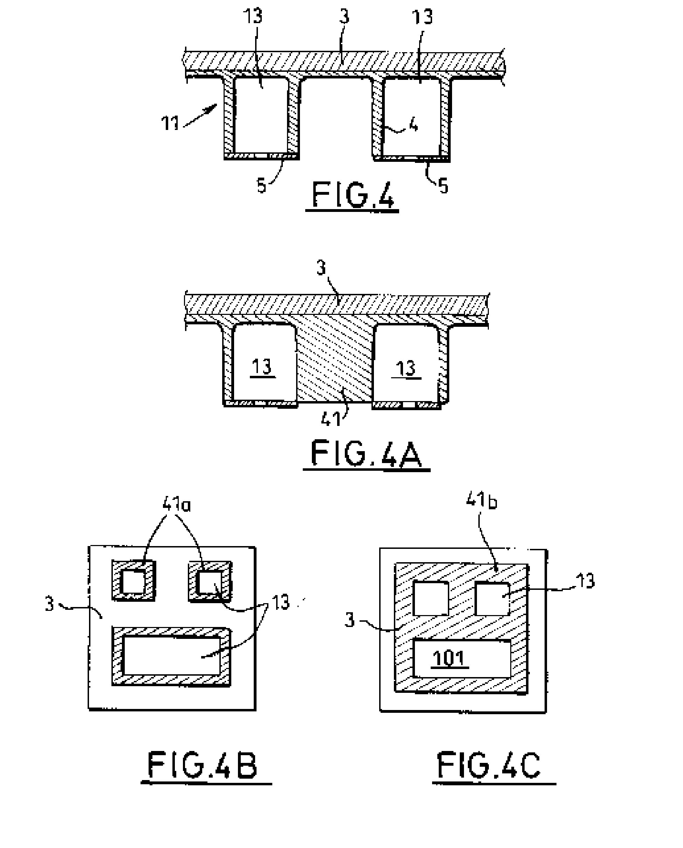

Comme on peut le voir sur les figures 4 et 4B, chaque résonateur 11 est défini par une cavité à parois individuelles 41a qui est fermée par une membrane individuelle 5. Par le choix de résonateurs 11 dont la paroi individuelle 4 est réalisée dans une matière souple, l'ensemble des résonateurs offre une forte compressibilité lorsqu'il est disposé sous la coque de support. De cette façon, le corps supérieur 9 ne réduit pas sensiblement la course de pénétration maximale du capot pendant un choc piéton.

Selon une autre variante de réalisation, chaque résonateur est de préférence réalisé avec une cavité 13 dont les parois individuelles 41, visibles sur les figures 4A et 4C, sont jointives avec les parois des résonateurs adjacents. Chaque résonateur reste équipé d'une membrane individuelle, perforée ou non suivant le type de résonateur sélectionné.

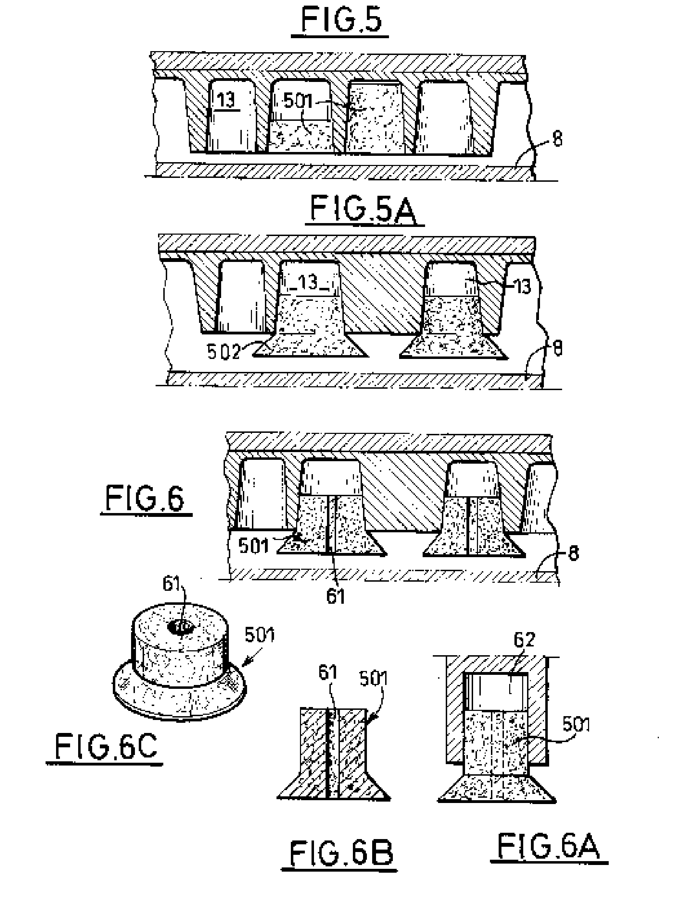

Suivant un autre mode de réalisation présenté aux figures 5 et 5a, le corps supérieur 9 est muni d' une couche dont l'épaisseur comporte des cavités 13 de forme sensiblement cylindrique, dont la paroi 4 est composée d'un matériau viscoélastique déformable. Les cavités 13 du corps supérieur ne sont pas recouvertes d'une membrane. Elles accueillent un corps coulissant de forme sensiblement cylindrique 501 maintenu partiellement enfoncé dans la cavité 13 et en légère compression contre les parois 4 de la cavité 13. Pendant la déformation du corps supérieur, le corps coulissant 501 peut coulisser avec déformation et avec frottement de ses parois contre les parois internes 4 de la cavité 13. Cette déformation est susceptible de dissiper une fraction de l'énergie du choc piéton. La partie non enfoncée 502 du corps cylindrique est réalisée de préférence suivant une forme sensiblement divergente par exemple de type conique (section croissante dans la direction s'écartant du corps supérieur).

Suivant une variante de réalisation présentée aux figures 6, 6a ,6b, 6c, la forme cylindrique intègre une section évidée 61 suivant l'axe de symétrie situé sensiblement au centre du cylindre. Cette section traverse le corps coulissant 501, et permet de coupler le volume d'air de la section évidée 61 avec le volume d'air délimité par la cavité réduite 62. Les volumes d'air de la cavité réduite 62 et de la section évidée 61 sont susceptibles de coopérer pour former un résonateur acoustique dissipant les bruits du composant.

Le corps supérieur 9 atténue le bruit dans la plage des moyennes fréquences comprise entre 350 et 1000 Hz.

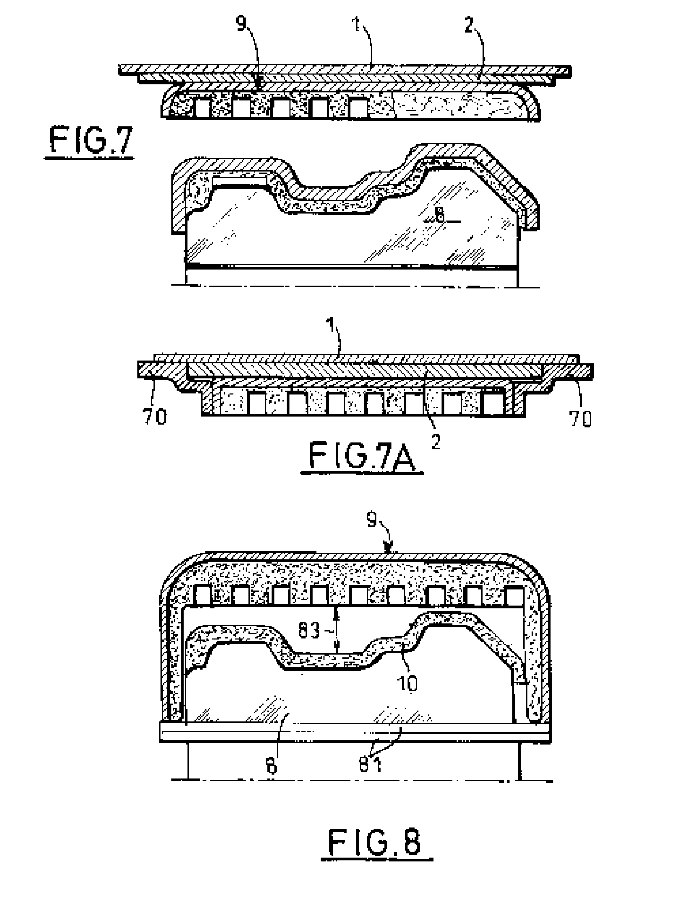

Indépendamment du mode de réalisation des constituants du corps supérieur 9 et du corps inférieur 10, l'invention prévoit la possibilité, comme on peut le voir sur la figure 7 de fixer le corps supérieur 9 sur le dessous du capot 1.

La figure 7A montre un autre cas où le corps supérieur 9 est solidaire du dessous du capot 1. On prévoit ici la possibilité de supprimer la coque porteuse et de la remplacer par la structure du capot 1. Dans ce cas, à l'emplacement du corps supérieur contre le capot 1, on prévoit de supprimer localement le matériau acoustique 70 qui habille le dessous du capot.

Selon un autre mode de réalisation visible sur la figure 8, le corps supérieur 9 est fixé à la périphérie du composant 8 et à la périphérie 81 du couvercle inférieur 10. Ceci en laissant une garde 83 entre la membrane de chaque résonateur et le dessus du corps inférieur 10. En effet, cette garde 83 est nécessaire pour ne pas perturber le fonctionnement des résonateurs.

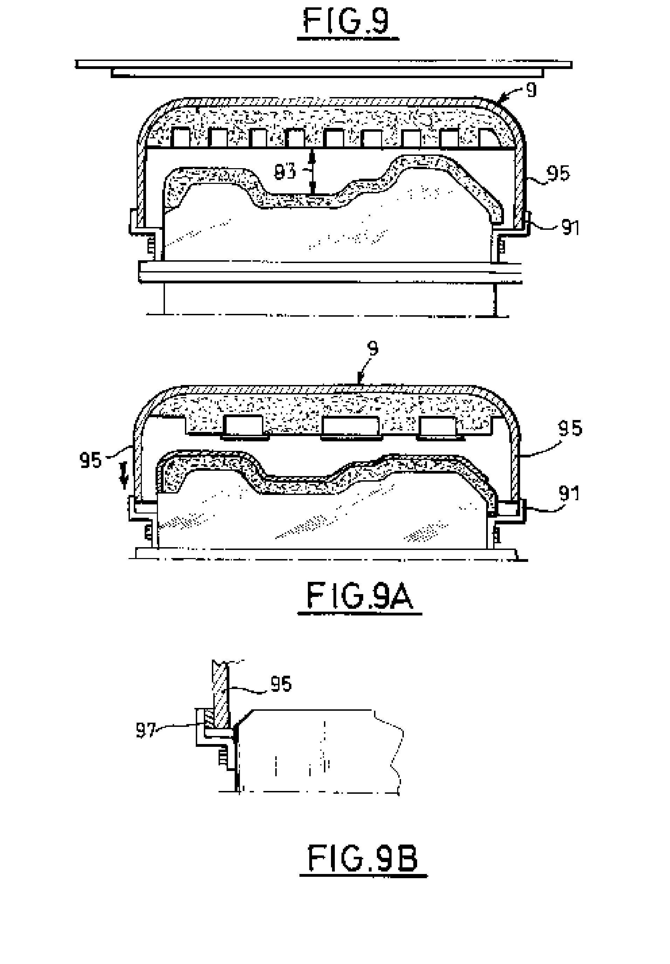

Les figures 9 et 9A montrent le cas où le corps supérieur 9 s'appuie sur le composant du haut-moteur 8. Dans cette configuration, des éléments de liaison 91 fixés au composant du haut-moteur 8 et, des bords latéraux 95 de la couche de support 3, sont prévus. Ces éléments de liaison 91 et ces bords latéraux permettent de respecter une garde 83 minimale entre les deux corps, celle-ci étant nécessaires pour ne pas perturber le fonctionnement des résonateurs.

On prévoit la possibilité de fixer les parties faiblement compressibles des éléments de liaison 91 dans une zone du composant de haut-moteur qui est située en dehors de la course d'enfoncement du capot 1, pendant le choc piéton.

Une variante du mode de fixation précédent, montrée à la figure 9b, prévoit que les éléments de liaison 91 incorporent un matériau souple compressible 97 assurant la fixation par compression contre les bords latéraux 95.

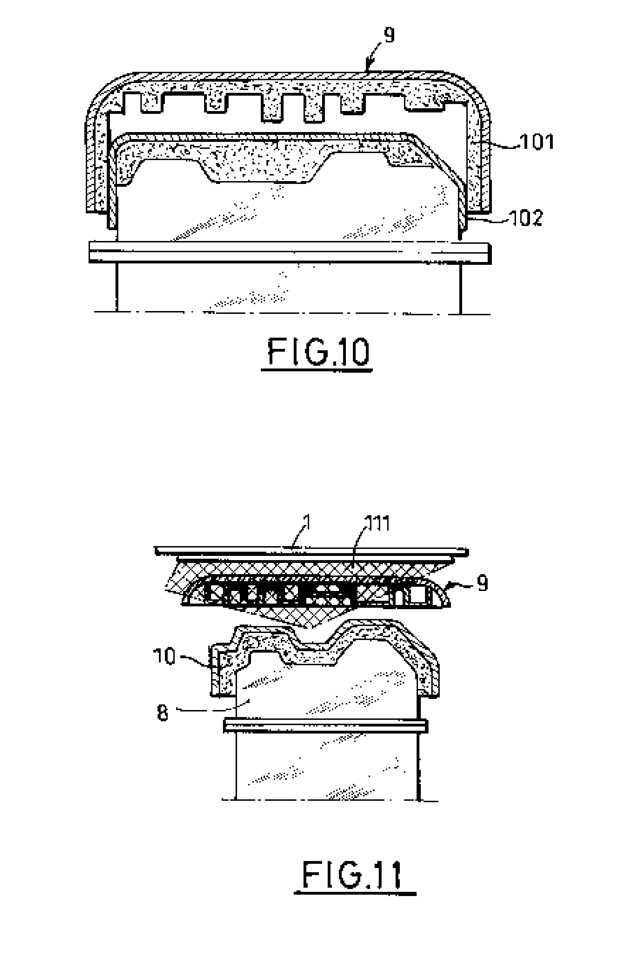

Le mode de réalisation de la figure 10 prévoit un autre type de fixation du corps supérieur 9 avec frottement possible des parois latérales 101 du corps supérieur 9, sur les parois latérales 102 du couvercle inférieur dans le but de dissiper l'énergie du choc piéton. Ce type de fixation est rendu possible grâce à une prolongation 101 de matière des résonateurs qui entre en contact avec le couvercle inférieur 10, à la périphérie de la couche de support du corps supérieur 9. Cette dernière fixation du corps supérieur 9 en contact avec le couvercle inférieur 10 s'effectue avec un recouvrement suffisant pour assurer une isolation partielle du rayonnement acoustique du composant.

De fait, l'épaisseur du couvercle inférieur 10 doit être ajustée pour rester en dehors de la course de pénétration maximale 111 du capot présenté à la figure 11.

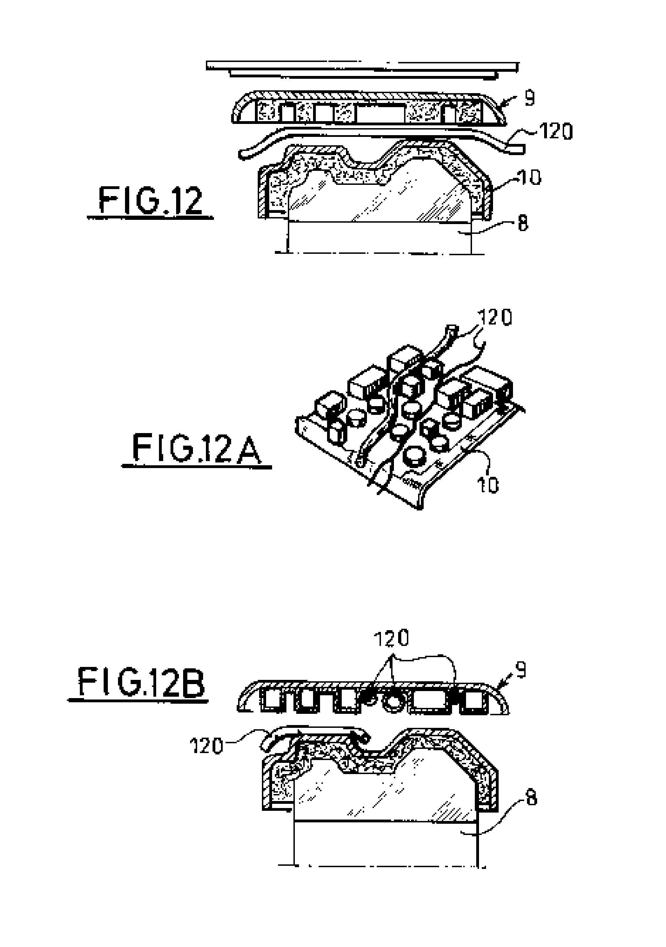

Le dispositif selon l'invention autorise, comme on peut le voir aux figures 12, 12a, 12b, le passage d'éléments traversant tels des câbles 120 ou des tuyaux. Lesdits éléments traversants ne perturbent pas la compressibilité du corps supérieur. Ce dispositif autorise aussi la circulation d'air nécessaire au refroidissement des pièces du haut-moteur.

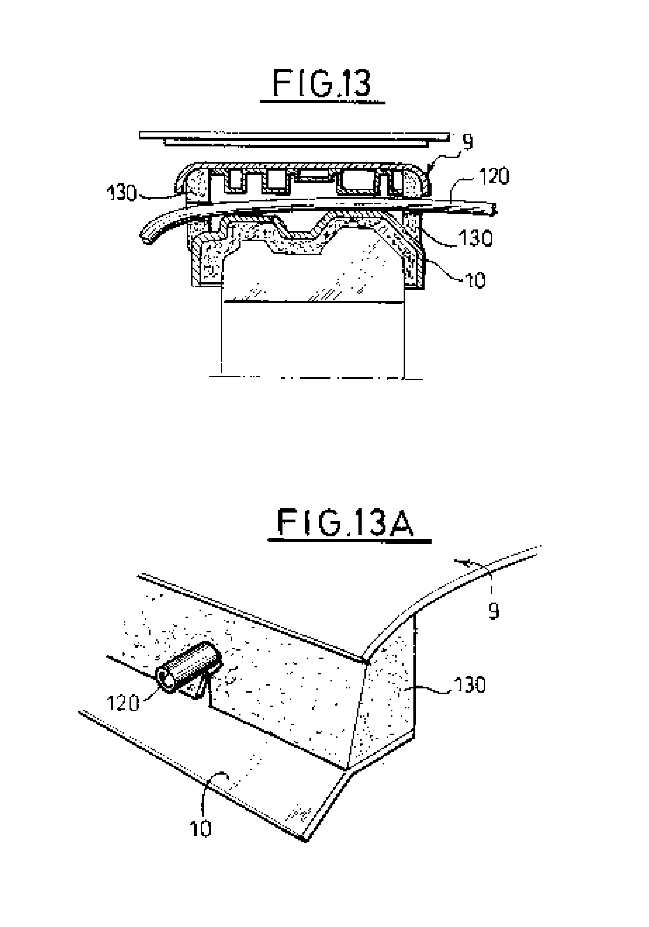

En outre, un matériau souple isolant 130 visible sur les figures 13 et 13a peut être mis en place entre la périphérie des bords du corps supérieur 9 et la périphérie des bords du couvercle inférieur 10. Ce matériau dispose d'une forme échancrée permettant le passage des éléments traversants 120 (câbles, tuyaux ou autres). Cette forme échancrée est sensiblement complémentaire à la forme des éléments traversants 120 passant entre le corps supérieur 9 et le couvercle inférieur 10.

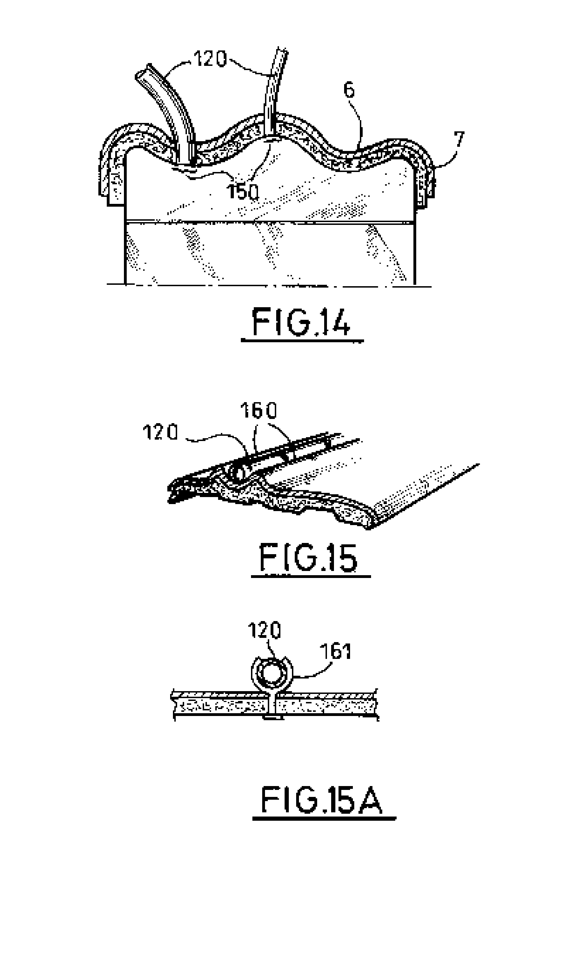

Indépendamment des modes de réalisation précités, sur la figure 14 on voit que le couvercle inférieur 10 peut comporter des orifices 150 aménagés pour le passage de câbles et de tuyaux 120, dans le but de permettre à ces câbles et tuyaux de se connecter au composant 8.

Les câbles et les tuyaux 120, et disposés au-dessus du couvercle inférieur peuvent également être guidés par la forme extérieure du couvercle inférieur, comme on peut le constater la figure 15.

La figure 15 permet de constater que la forme extérieure du couvercle inférieur peut comporter des creux 160 ou des éléments rapportés 161 à même de guider ou de clipper les câbles et les tuyaux 120 au contact de la surface extérieure du couvercle inférieur 10.

## Revendications

1. Dispositif insonorisant multicouche pour au moins un composant du compartiment moteur d'un véhicule automobile composé d'au moins un couvercle inférieur (10), s'appuyant au moins partiellement sur un composant du haut-moteur (8), et d'un corps supérieur (9) recouvrant avec un espacement le couvercle inférieur (10), le véhicule comportant un capot (1), **caractérisé en ce que**, le couvercle inférieur (10) est placé en dehors de l'espace de déformation du capot (1), tandis que le corps supérieur (9) est placé dans l'espace de déformation du capot (1)

2. Dispositif insonorisant selon la revendication 1, **caractérisé en ce que** le corps supérieur (9) est composé d'une couche de support (3) dont la face dirigée vers le composant est solidaire d'un ensemble de résonateurs (11) réalisés dans un matériau souple constituant des cavités individuelles (13).

3. Dispositif insonorisant selon la revendication 2, **caractérisé en ce qu'**une membrane de type épais et perforé (32) ou souple et non perforé (5) recouvre au moins une cavité (13).

4. Dispositif insonorisant selon les revendication 2 ou 3, **caractérisé en ce qu'**un corps viscoélastique (501) remplit tout ou partie d'au moins une cavité (13).

5. Dispositif insonorisant selon les revendication 2, 3 ou 4, **caractérisé en ce qu'**un corps coulissant (501) est maintenu partiellement enfoncé dans au moins une cavité (13), par une compression locale des parois latérales de ladite cavité (13) contre les parois latérales du corps coulissant (501).

6. Dispositif insonorisant selon la revendication 5, **caractérisé en ce que** le corps coulissant (501) est de forme sensiblement cylindrique, et **en ce que**, la partie non enfoncée du corps coulissant (501) présente une forme divergente dans la direction tournée vers le composant (8).

7. Dispositif insonorisant selon la revendication 6, **caractérisé en ce que** le corps coulissant (501) est traversé par une section évidée (61) située sensiblement suivant son axe de symétrie, et le traversant de manière à permettre de coupler le volume d'air de la section évidée (61) avec le volume d'air dans une cavité réduite (62), par le sommet du corps coulissant (501), lesdits volumes d'air étant susceptibles de coopérer pour former un résonateur acoustique.

8. Dispositif insonorisant selon l'une quelconque des revendications 2 à 7, **caractérisé en ce qu'**un ressort ensaché (301) de forme sensiblement cylindrique est au moins partiellement en foncé dans au moins une cavité (13), et est maintenu en légère compression au moyen d'un film étanche (302) tendu par le ressort (301), ledit film (302) formant des parois membranaires supérieures (303) et inférieures (304).

9. Dispositif insonorisant selon l'une quelconque des revendications précédentes **caractérisé en ce que**, le couvercle inférieur (10) est composé d'une couche acoustiquement isolante (6) recouvrant au moins un matériau acoustiquement absorbant (7) ayant une forme complémentaire à celle de la surface du composant (8) tourné vers le couvercle (10).

10. Dispositif insonorisant selon la revendication 9 **caractérisé en ce que**, le matériau absorbant (7) est en contact avec la surface extérieure du composant (8).

11. Dispositif insonorisant selon la revendication 10 **caractérisé en ce que**, le matériau absorbant acoustique (7) composant le couvercle inférieur (10) intègre au moins une couche de matériau (21) dont la masse surfacique diffère de celle du matériau absorbant (7).

12. Dispositif insonorisant selon la revendication 11 **caractérisé en ce qu'**un matériau souple isolant (130) est mis en place entre la périphérie des bords du corps supérieur (9), et la périphérie des bords du couvercle inférieur (10), ledit matériau disposant d'une forme échancrée permettant le passage d'éléments traversant (120), ladite forme échancrée étant sensiblement complémentaire de la forme des éléments traversant (120) passant entre le corps supérieur (9) et le couvercle inférieur (10).

13. Dispositif insonorisant selon la revendication 12 **caractérisé en ce que** le corps supérieur (9) recouvre le couvercle inférieur grâce à une prolongation de matière (110) des résonateurs (11) qui entre en contact avec le couvercle inférieur (10) à la périphérie de la couche de support (3) du corps supérieur (9).
